# EUROPEAN PATENT SPECIFICATION

(11) **EP 4 230 914 B1**
(45) Date of publication and mention of the grant of the patent: **25.12.2024**
(21) Application number: 23157302.3
(22) Date of filing: 17.02.2023
(51) Int. Cl.: F23R 3/28, F23R 3/16

(54) **COMBUSTOR NOZZLE, COMBUSTOR, AND GAS TURBINE INCLUDING THE SAME**
BRENNKAMMERDÜSE, BRENNKAMMER UND GASTURBINE DAMIT
BUSE DE CHAMBRE DE COMBUSTION, CHAMBRE DE COMBUSTION ET TURBINE À GAZ COMPRENANT CELLE-CI

(30) Priority: 21.02.2022 KR 20220022450
(43) Date of publication of application: 23.08.2023
(73) Proprietor: Doosan Enerbility Co., Ltd., Seongsan-gu Changwon-si, Gyeongsangnam-do 51711 (KR)
(72) Inventor: SHERSHNYOV, Borys, 51632 Changwon-si, Gyeongsangnam-do (KR)
(74) Representative: Ter Meer Steinmeister & Partner

(56) References cited:
- WO-A1-2022/015321
- JP-A- 2015 014 400
- US-A- 4 100 733
- US-A1- 2011 083 439
- US-A1- 2014 157 779
- US-A1- 2022 003 167

## Description

### BACKGROUND

### Technical Field

Exemplary embodiments relate to a combustor nozzle, a combustor, and a gas turbine including the same, and more particularly, to a combustor nozzle using fuel containing hydrogen, a combustor, and a gas turbine including the same.

### Related Art

A gas turbine is a power engine that mixes air compressed by a compressor with fuel for combustion and rotates a turbine with hot gas produced by the combustion. The gas turbine is used to drive a generator, an aircraft, a ship, a train, etc.

The gas turbine typically includes a compressor, a combustor, and a turbine. The compressor sucks and compresses outside air, and then transmits the compressed air to the combustor. The air compressed by the compressor becomes high pressure and high temperature. The combustor mixes the compressed air flowing from the compressor with fuel and burns a mixture thereof. The combustion gas produced by the combustion is discharged to the turbine. Turbine blades in the turbine are rotated by the combustion gas, thereby generating power. The generated power is used in various fields, such as generating electric power and actuating machines.

Fuel is injected through nozzles installed in each combustor section of the combustor, and the nozzles allow for injection of gas fuel and liquid fuel. In recent years, it is recommended to use hydrogen fuel or fuel containing hydrogen to inhibit the emission of carbon dioxide.

However, since hydrogen has a high combustion rate, when hydrogen fuel or fuel containing hydrogen is burned in a gas turbine combustor, the flame formed in the gas turbine combustor approaches and heats the structure of the gas turbine combustor, which may cause a problem with the reliability of the gas turbine combustor.

In addition, in a gas turbine that burns hydrogen, it is necessary to efficiently cool a nozzle tip part in order to prevent deterioration of the nozzle tip part.

US 2011/083439 A1 presents a fuel injection nozzle that includes a body member having an upstream wall opposing a downstream wall, and an internal wall disposed between the upstream wall and the downstream wall, a first chamber partially defined by the an inner surface of the upstream wall and a surface of the internal wall, a second chamber partially defined by an inner surface of the downstream wall and a surface of the internal wall a first gas inlet communicative with the first chamber operative to emit a first gas into the first chamber, a second gas inlet communicative with the second chamber operative to emit a second gas into the second chamber, and a plurality of mixing tubes, each of the mixing tubes having a tube inner surface, a tube outer surface, a first inlet communicative with an aperture in the upstream wall operative to receive a third gas.

JP 2015 014400 A provides a gas turbine combustor that includes: an air supply flow passage constitution member in which plural air supply flow passages for supplying air to a combustion chamber are formed; and plural fuel nozzles that injects fuel to the combustion chamber through the air supply flow passages. In the gas turbine combustor, swirl flow is formed in the air supply flow passage, and contraction flow is made occur in the swirl flow, to thereby supply air and fuel to the combustion chamber.

US 2022/003167 A1 presents a combustor nozzle, and a combustor and gas turbine including the same. The combustor nozzle includes a main cylinder having a fuel passage through which fuel flows, a nozzle shroud surrounding the main cylinder, and a fuel injection module disposed between the main cylinder and the nozzle shroud to inject fuel, wherein the fuel injection module includes a plurality of first struts protruding from the main cylinder and having strut injection holes to inject fuel, a first support tube coupled to outer ends of the first struts, and a plurality of second struts protruding from the first support tube and having strut injection holes to inject fuel, and each of the first and second struts includes a swirl guide inclined with respect to a longitudinal direction of the main cylinder.

US 2014/157779 A1 presents a combustor that includes an end cap that extends radially across at least a portion of the combustor. The end cap includes an upstream surface axially separated from a downstream surface. A plurality of tubes extend from the upstream surface through the downstream surface of the end cap to provide fluid communication through the end cap. Each tube in a first set of the plurality of tubes has an inlet proximate to the upstream surface and an outlet downstream from the downstream surface. Each outlet has a first portion that extends a different axial distance from the inlet than a second portion.

US 4 100 733 A presents an apparatus for supplying fuel to the combustion chamber of a gas turbine engine.

WO 2022/015321 A1 presents a premixer injector assembly in a gas turbine engine.

### SUMMARY

It is an object to overcome one or more of the problems of the prior art. It is an object to provide a combustor nozzle having a nozzle tip part capable of being efficiently cooled, a combustor, and a gas turbine including the same. In addition, it is an object to provide a combustor nozzle capable of uniformly mixing fuel and air, a combustor, and a gas turbine including the same. At least one of these objects is solved by the features of the independent claims.

Additional aspects will be set forth in part in the description which follows and, in part, will become apparent from the description, or may be learned by practice of the exemplary embodiments.

According to an aspect of an exemplary embodiment, the front plate may include a center hole connected to the fuel tube. The front plate may include further an outer hole disposed outside the center hole to allow fuel to pass therethrough.

The multi-tube may be equipped with a rear plate disposed at a rear end thereof. The multi-tube may further be equipped with a manifold plate spaced apart from the rear plate to define a distribution space.

The at least one mixing guide may consist of a plurality of mixing guides installed in the mixing tube. The mixing guides may be fixed to an inner wall of the mixing tube and/or spaced apart from each other in a circumferential direction of the mixing tube.

The mixing tube may include an inlet formed at one longitudinal end thereof to introduce air through the inlet. The mixing tube may include an injection port formed at the other longitudinal end thereof to inject, a mixture in which fuel and air are premixed, through the injection port. The mixing tube may include an injection hole formed on an outer peripheral surface thereof to inject fuel to the inside through said injection hole.

The mixing guide may be positioned between said injection holes.

A first gap between a radially central portion of the front plate and the tip plate may be smaller than a second gap formed between a radially outer portion of the front plate and the tip plate.

The front plate may be formed to be inclined rearward from the radial center thereof toward the outside.

According to an aspect, there is provided a combustor including: a burner having a plurality of nozzles for injecting fuel and air, and a duct assembly coupled to one side of the burner to burn a mixture of the fuel and the air therein and transmit combustion gas to a turbine, wherein at least one of or each of the nozzles is a nozzle according to any one of the herein described embodiments.

According to an aspect of another exemplary embodiment, there is provided a combustor including a burner having a plurality of nozzles for injecting fuel and air, and a duct assembly coupled to one side of the burner to burn a mixture of the fuel and the air therein and transmit combustion gas to a turbine. Each of the nozzles includes a plurality of mixing tubes through which air and fuel flow, a multi-tube configured to contain and support the mixing tubes, a fuel tube formed inside the multi-tube and through which fuel flows, a tip plate coupled to a tip of the multi-tube, and a front plate spaced apart from the tip plate to define a cooling space.

The front plate may include a center hole connected to the fuel tube, and an outer hole disposed outside the center hole to allow fuel to pass therethrough.

The multi-tube may be equipped with a rear plate disposed at a rear end thereof, and with a manifold plate spaced apart from the rear plate to define a distribution space.

According to an aspect, there is provided a gas turbine including: a compressor configured to compress air introduced thereinto from the outside, a combustor configured to mix fuel with the air compressed by the compressor for combustion, and a turbine having a plurality of turbine blades rotated by combustion gas produced by the combustion in the combustor. The combustor may be a combustor according to any one of the herein described embodiments.

According to an aspect of a further exemplary embodiment, there is provided a gas turbine including a compressor configured to compress air introduced thereinto from the outside, a combustor configured to mix fuel with the air compressed by the compressor for combustion, and a turbine having a plurality of turbine blades rotated by combustion gas produced by the combustion in the combustor. The combustor comprises a burner having a plurality of nozzles for injecting fuel and air, and a duct assembly coupled to the burner to burn a mixture of the fuel and the air therein and transmit combustion gas to a turbine. At least one of or each of the nozzles includes a plurality of mixing tubes through which air and fuel flow, a multi-tube configured to contain and support the mixing tubes, a fuel tube formed inside the multi-tube and through which fuel flows, a tip plate coupled to a tip of the multi-tube, and a front plate spaced apart from the tip plate to define a cooling space.

### BRIEF DESCRIPTION OF THE DRAWINGS

The above and other aspects will become more apparent from the following description of the exemplary embodiments with reference to the accompanying drawings, in which:
FIG. 1 is a view illustrating an interior of a gas turbine according to a first exemplary embodiment;
FIG. 2 is a view illustrating the combustor of FIG. 1;
FIG. 3 is a longitudinal cross-sectional view illustrating one nozzle according to the first exemplary embodiment;
FIG. 4 is a rear cutaway perspective view illustrating the nozzle according to the first exemplary embodiment;
FIG. 5 is a cross-sectional view illustrating a mixing guide according to the first exemplary embodiment;
FIG. 6 is a cross-sectional view illustrating a guide plate of the mixing guide according to the first exemplary embodiment;
FIG. 7 is a cross-sectional view illustrating a front plate and a tip plate according to a second exemplary embodiment; and
FIG. 8 is a cross-sectional view illustrating a front plate and a tip plate according to a third exemplary embodiment.

### DETAILED DESCRIPTION

Various modifications and different embodiments will be described below in detail with reference to the accompanying drawings so that those skilled in the art can easily carry out the disclosure. It should be understood, however, that the present disclosure is not intended to be limited to the specific embodiments, but the present disclosure includes all modifications, equivalents or replacements that fall within the scope of the disclosure as defined in the following claims.

The terminology used herein is for the purpose of describing specific embodiments only and is not intended to limit the scope of the disclosure. As used herein, the singular forms "a", "an" and "the" are intended to include the plural forms as well, unless the context clearly indicates otherwise. In the disclosure, terms such as "comprises", "includes", or "have/has" should be construed as designating that there are such features, integers, steps, operations, components, parts, and/or combinations thereof, not to exclude the presence or possibility of adding of one or more of other features, integers, steps, operations, components, parts, and/or combinations thereof.

Exemplary embodiments will be described below in detail with reference to the accompanying drawings. It should be noted that like reference numerals refer to like parts throughout various drawings and exemplary embodiments. In certain embodiments, a detailed description of functions and configurations well known in the art may be omitted to avoid obscuring appreciation of the disclosure by those skilled in the art. For the same reason, some components may be exaggerated, omitted, or schematically illustrated in the accompanying drawings.

Hereinafter, a gas turbine according to a first exemplary embodiment will be described.

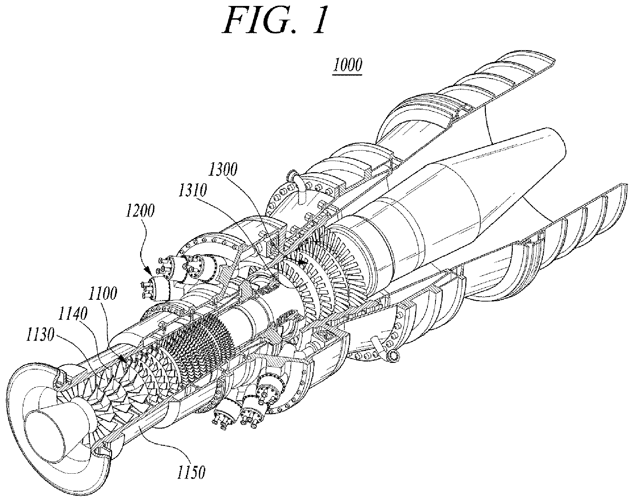

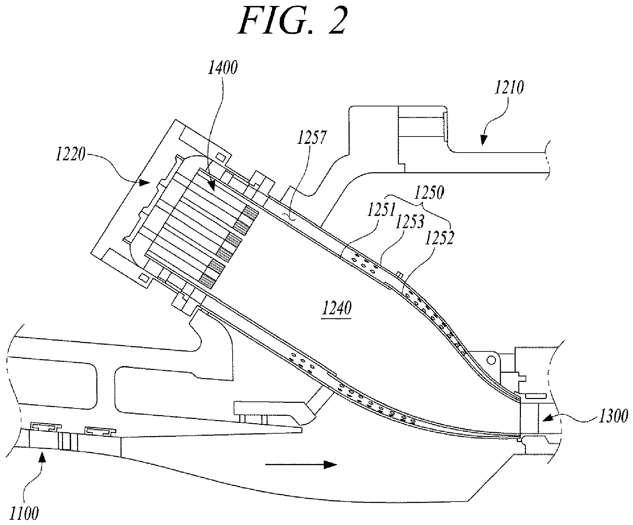

FIG. 1 is a view illustrating the interior of the gas turbine according to the first exemplary embodiment. FIG. 2 is a view illustrating the combustor of FIG. 1.

The thermodynamic cycle of the gas turbine, which is designated by reference numeral 1000, according to the present embodiment may ideally follow a Brayton cycle. The Brayton cycle may consist of four phases including isentropic compression (adiabatic compression), isobaric heat addition, isentropic expansion (adiabatic expansion), and isobaric heat dissipation. In other words, in the Brayton cycle, thermal energy may be released by combustion of fuel in an isobaric environment after the atmospheric air is sucked and compressed to a high pressure, hot combustion gas may be expanded to be converted into kinetic energy, and exhaust gas with residual energy may then be discharged to the atmosphere. The Brayton cycle may consist of four processes, i.e., compression, heating, expansion, and exhaust.

The gas turbine 1000 using the above Brayton cycle may include a compressor 1100, a combustor 1200, and a turbine 1300, as illustrated in FIG. 1. Although the following description is given with reference to FIG. 1, the present disclosure may be widely applied to a turbine engine having the same configuration as the gas turbine 1000 exemplarily illustrated in FIG. 1.

Referring to FIG. 1, the compressor 1100 of the gas turbine 1000 may suck air from the outside and compress the air. The compressor 1100 may supply the combustor 1200 with the air compressed by compressor blades 1130, and may supply cooling air to a hot region required for cooling in the gas turbine 1000. In this case, since the air sucked into the compressor 1100 is subject to an adiabatic compression process therein, the pressure and temperature of the air that has passed through the compressor 1100 increase.

The compressor 1100 is designed as a centrifugal compressor or an axial compressor. In general, the centrifugal compressor is applied to a small gas turbine, whereas the multistage axial compressor is applied to the large gas turbine 1000 as illustrated in FIG. 1 because it is necessary to compress a large amount of air. In the multistage axial compressor, the compressor blades 1130 of the compressor 1100 rotate along with the rotation of rotor disks to compress air introduced thereinto while delivering the compressed air to rear-stage compressor vanes 1140. The air is compressed increasingly to a high pressure while passing through the compressor blades 1130 formed in a multistage manner.

A plurality of compressor vanes 1140 may be formed in a multistage manner and mounted in a compressor casing 1150. The compressor vanes 1140 guide the compressed air, which flows from front-stage compressor blades 1130, to rear-stage compressor blades 1130. In an exemplary embodiment, at least some of the plurality of compressor vanes 1140 may be mounted so as to be rotatable within a fixed range for regulating the inflow rate of air or the like.

The compressor 1100 may be driven by some of the power output from the turbine 1300. To this end, the rotary shaft of the compressor 1100 may be directly connected to the rotary shaft of the turbine 1300, as illustrated in FIG. 1. In the large gas turbine 1000, the compressor 1100 may require almost half of the power generated by the turbine 1300 for driving. Accordingly, the overall efficiency of the gas turbine 1000 can be enhanced by directly increasing the efficiency of the compressor 1100.

The turbine 1300 includes a plurality of rotor disks 1310, a plurality of turbine blades radially arranged on each of the rotor disks 1310, and a plurality of turbine vanes. Each of the rotor disks 1310 has a substantially disk shape and has a plurality of grooves formed on the outer peripheral portion thereof. The grooves are each formed to have a curved surface so that the turbine blades are inserted into the grooves, and the turbine vanes are mounted in a turbine casing. The turbine vanes are fixed so as not to rotate and serve to guide the direction of flow of the combustion gas that has passed through the turbine blades. The turbine blades generate rotational force while rotating by the combustion gas.

Meanwhile, the combustor 1200 may mix the compressed air, which is supplied from the outlet of the compressor 1100, with fuel for isobaric combustion to produce combustion gas with high energy. FIG. 2 illustrates an example of the combustor 1200 applied to the gas turbine 1000. The combustor 1200 may include a combustor casing 1210, a burner 1220, a nozzle 1400, and a duct assembly 1250.

The combustor casing 1210 may have a substantially circular shape so as to surround a plurality of burners 1220. The burners 1220 may be disposed along the annular combustor casing 1210 downstream of the compressor 1100. Each of the burners 1220 includes a plurality of nozzles 1400, and the fuel injected from the nozzles 1400 is mixed with air at an appropriate rate so that the mixture thereof is suitable for combustion.

The gas turbine 1000 may use gas fuel, especially fuel containing hydrogen. The fuel may be either hydrogen fuel alone or fuel containing hydrogen and natural gas.

Compressed air is supplied to the nozzles 1400 along the outer surface of the duct assembly 1250, which connects an associated one of the burners 1220 to the turbine 1300 so that hot combustion gas flows through the duct assembly 1250. In this process, the duct assembly 1250 heated by the hot combustion gas is properly cooled.

The duct assembly 1250 may include a liner 1251, a transition piece 1252, and a flow sleeve 1253. The duct assembly 1250 has a double structure in which the flow sleeve 1253 surrounds the liner 1251 and the transition piece 1252. The liner 1251 and the transition piece 1252 are cooled by the compressed air permeated into an annular space inside the flow sleeve 1253.

The liner 1251 is a tubular member connected to the burner 1220 of the combustor 1200, and the combustion chamber 1240 is a space within the liner 1251. The liner 1251 has one longitudinal end coupled to the burner 1220 and the other longitudinal end coupled to the transition piece 1252.

The transition piece 1252 is connected to the inlet of the turbine 1300 and serves to guide hot combustion gas to the turbine 1300. The transition piece 1252 has one longitudinal end coupled to the liner 1251 and the other longitudinal end coupled to the turbine 1300. The flow sleeve 1253 serves to protect the liner 1251 and the transition piece 1252 while preventing high-temperature heat from being directly released to the outside.

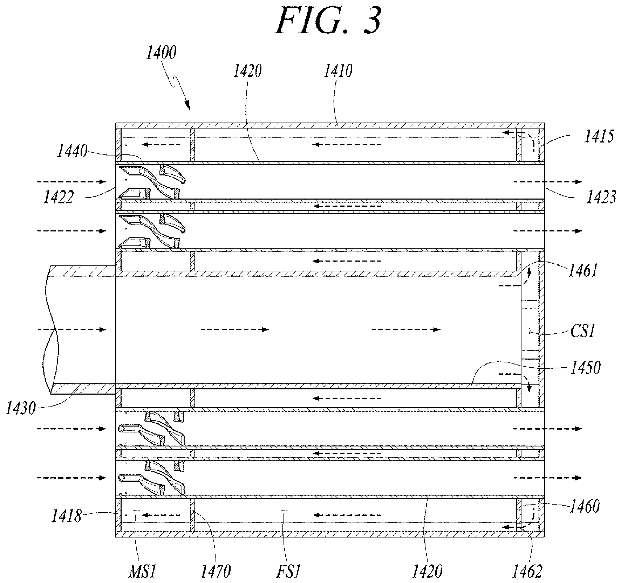

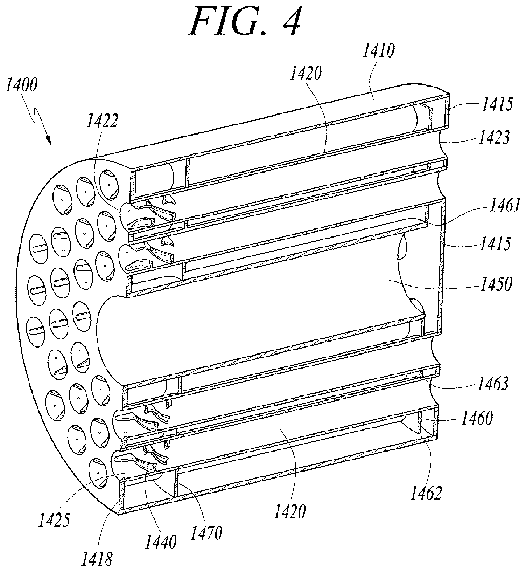

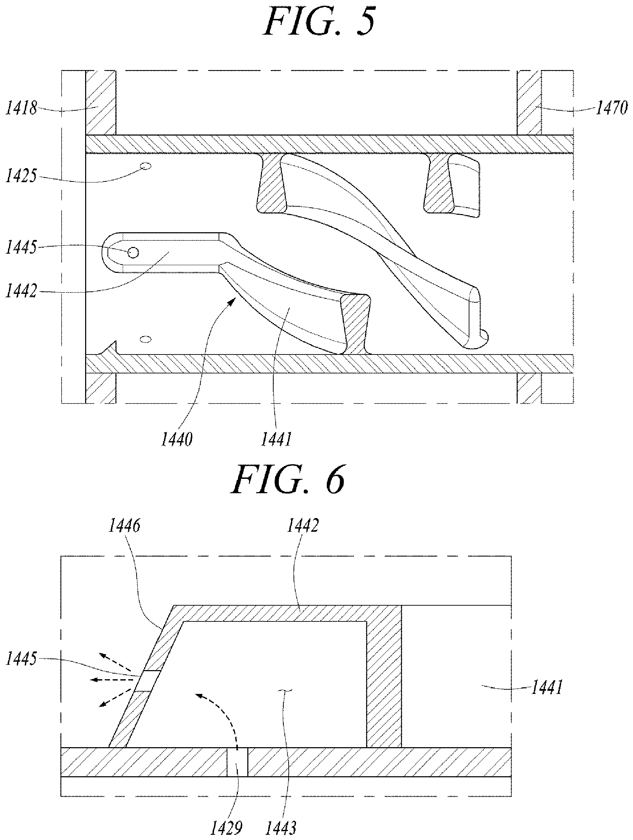

FIG. 3 is a longitudinal cross-sectional view illustrating one nozzle according to the first exemplary embodiment. FIG. 4 is a rear cutaway perspective view illustrating the nozzle according to the first exemplary embodiment. FIG. 5 is a cross-sectional view illustrating a mixing guide according to the first exemplary embodiment. FIG. 6 is a cross-sectional view illustrating a guide plate of the mixing guide according to the first exemplary embodiment.

Referring to FIGS. 3 to 6, the nozzle 1400 may include a plurality of mixing tubes 1420 through which air and fuel flow, a multi-tube 1410 surrounding the mixing tubes 1420, a fuel tube 1450 formed inside the multi-tube 1410, a tip plate 1415 coupled to the tip of the multi-tube 1410, and a front plate 1460 spaced apart from the tip plate 1415.

The multi-tube 1410 is generally in a cylindrical shape and has a space defined therein. The nozzle 1400 may further include a fuel supply pipe 1430 for supplying fuel to the multi-tube 1410. Here, the fuel may be gas containing hydrogen. The multitube 1410 may allow for fine injection of hydrogen and air.

The fuel tube 1450 may be disposed in the radial center of the multi-tube 1410 to provide a flow space of fuel. The direction of the flow of the fuel in the fuel tube 1450 may be referred to as the longitudinal direction or an axial direction. The fuel tube 1450 may have one longitudinal end connected to the fuel supply pipe 1430 to receive fuel, and the other longitudinal end connected to the front plate 1460 to supply fuel to a cooling space CS1. The one longitudinal end of the fuel tube 1450 connected to the fuel supply pipe 1430 may be referred to as an upstream end of the fuel tube 1450 or an rear end of the fuel tube 1450 and the other longitudinal end of the fuel tube connected to the front plate may be referred to as a downstream end of the fuel tube 1450 or an front end of the fuel tube 1450.

The tip plate 1415 is coupled to the tip of the multi-tube 1410 to define the cooling space CS1. The tips of the plurality of mixing tubes 1420 may be inserted into the tip plate 1415. The front plate 1460 is spaced apart from the tip plate 1415 to define the cooling space. In other words, the cooling space CS1 may be disposed between the front plate 1460 and the tip plate 1415. The cooling space CS1 may be disposed between the tip plate 1415 and the front plate 1460 and between the plurality of mixing tubes 1420. The front plate 1460 may be fixed to the inner wall of the multi-tube 1410.

The front plate 1460 may include a center hole 1461 to which the fuel tube 1450 is coupled, and an outer hole 1462 formed outside the center hole 1461 to allow the cooled fuel to flow rearward (upstream direction based on the flow direction of the fuel in the fuel tube 1450) therethrough. In other words, the fuel may flow in the fuel tube 1450 toward the front plate 1460 in the downstream direction, and then flow through the center hole 1461 of the front plate 1460 in the downstream direction, and then flow through the outer hole 1462 of the front plate 1460 in the upstream direction, and then flow away from the front plate 1460 in the upstream direction. When the fuel flows after the center hole 1461 and before the outer hole 1462, the fuel may flow through the cooling space CS1 generally in a direction radially outward from the radial center of the multi-tube 1410. The center hole 1461 may be disposed in the radial center of the front plate 1460, and the outer hole 1462 may be formed at the radially outer end of the front plate 1460. The outer hole 1462 may be formed continuously in a circumferential direction of the front plate 1460, or may consist of a plurality of outer holes spaced apart from each other in the circumferential direction of the front plate 1460.

Accordingly, the fuel introduced into the cooling space CS1 through the center hole 1461 may cool the multi-tube 1410 while flowing radially outwards after impacting and cooling the tip plate 1415, and flow rearward (upstream direction based on the flow direction of the fuel in the fuel tube 1450) through the outer hole 1462. At the rear side of the cooling space CS1, a separate movement space FS1 may be defined by the front plate 1460. In the movement space FS1, the fuel may flow toward the inlet of each mixing tube 1420.

Meanwhile, each of the mixing tubes 1420 may be equipped with a manifold plate 1470 to define a distribution space MS1. The movement space FS1 may be disposed between the front plate 1460 and the manifold plate 1470. A rear plate 1418 may be installed at the rear end of the multi-tube 1410, and the manifold plate 1470 may be spaced apart from the rear plate 1418. The manifold plate 1470 may have a plurality of holes formed therein for flow of fuel.

The distribution space MS1 may be defined between the rear plate 1418 and the manifold plate 1470. The fuel, after flowing from the movement space FS1 to the distribution space MS1, may be injected into each mixing tube 1420 from the distribution space MS1.

The plurality of mixing tubes 1420 may be installed inside the multi-tube 1410 to form several small flames using hydrogen gas. The mixing tubes 1420 may be spaced apart from each other in the multi-tube 1410 and formed parallel to each other. Each of the mixing tubes 1420 may have a cylindrical shape.

The mixing tube 1420 may have an injection port 1423 formed at the front thereof to inject a mixture of air and fuel through the injection port 1423, and an inlet 1422 formed at the rear thereof to introduce air through the inlet 1422.

The mixing tube 1420 may have a plurality of injection holes 1425 connected to the distribution space MS1. The fuel may be injected into the mixing tube 1420 through said injection holes 1425 from the distribution space MS1. The injection holes 1425 may allow fuel to be injected toward the radial center of the mixing tube 1420.

The mixing tube 1420 are equipped with a mixing guide 1440 therein, which extends spirally and is positioned between the first injection holes 1425. The mixing guide 1440 may be fixed to the inner wall of the mixing tube 1420. Alternatively, the mixing guide 1440 may consist of a plurality of mixing guides spaced apart from each other in the circumferential direction of the mixing tube 1420 on the inner wall of the mixing tube 1420.

The mixing guide 1440 includes a spiral part 1441 extending spirally and a guide plate 1442 protruding from the spiral part 1441 toward the inlet and having a flat shape. The spiral part 1441 extends spirally to induce a rotational flow, and fuel and air may be uniformly mixed by the rotational flow.

Meanwhile, the guide plate 1442 has a chamber 1443 for accommodation of fuel therein and a further injection hole 1445 through which fuel is injected. The guide plate 1442 has a flat shape formed in the axial direction, and the chamber 1443 is connected to the distribution space MS 1 to receive fuel. The guide plate 1442 may have an inclined surface 1446 formed at a portion thereof toward the inlet 1422 to be inclined with respect to the inner peripheral surface of the mixing tube 1420, and the second injection hole 1445 may be formed on the inclined surface 1446. The inclined surface 1446 may be inclined toward the downstream of the mixing tube 1420 as the inclined surface 1446 is formed inwardly from the inner surface of the mixing tube 1420. The second injection hole 1445 may allow fuel to be injected in a direction opposite to the direction of inflow of air, thereby inducing turbulence so that fuel and air may be uniformly mixed.

Hereinafter, one nozzle according to a second exemplary embodiment will be described.

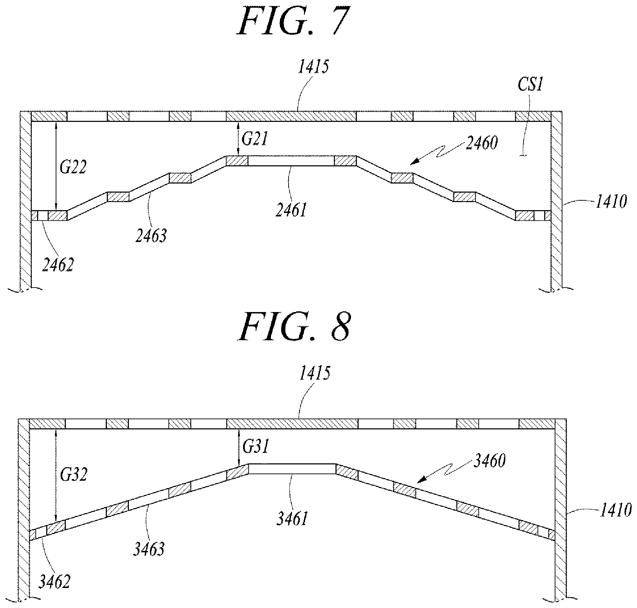

FIG. 7 is a cross-sectional view illustrating a front plate and a tip plate according to the second exemplary embodiment.

Referring to FIG. 7, since the nozzle, which is designated by reference numeral 2400, according to the second exemplary embodiment has the same structure as the nozzle according to the first exemplary embodiment, except for a front plate, a redundant description thereof will be omitted.

The tip plate 1415 is coupled to the tip of the multi-tube 1410. The tips of the plurality of mixing tubes may be inserted into the tip plate 1415. The front plate, which is designated by reference numeral 2460, is spaced apart from the tip plate 1415 to define the cooling space CS1. The cooling space CS1 may be disposed between the tip plate 1415 and the front plate 2460 and between the plurality of mixing tubes. The front plate 2460 and the tip plate 1415 may be fixed to the inner wall of the multi-tube 1410.

The front plate 2460 may include a center hole 2461 to which the fuel tube is coupled, and an outer hole 2462 formed radially outside the center hole 2461 to allow the cooled fuel to flow rearward ( upstream direction based on the flow direction of the fuel in the fuel tube 1450) therethrough. In addition, the front plate 2460 may have an installation hole 2463 into which the mixing tube 2420 is inserted.

The first gap G21 between the radially central portion of the front plate 2460 and the tip plate 1415 may be smaller than the second gap G22 between the radially outer portion of the front plate 2460 and the tip plate 1415. The front plate 2460 may include a portion parallel to the tip plate 1415 and a portion inclined rearward with respect to the tip plate 1415.

Accordingly, the front plate 2460 may be formed to have at least one inclined portion and at least one parallel portion, such that each of the inclined portion is inclined rearward step by step, and the at least one parallel portion is parallel to the radially central portion of the front plate 2460 and the gap between the front plate 2460 and the tip plate 1415 increases step by step toward the outside. The fuel introduced into the central portion of the nozzle may be heated and flow outwards, in which case, if the amount of fuel accommodated in the outer portion of the nozzle increases, that portion may also be sufficiently cooled by the fuel.

Hereinafter, one nozzle according to a third exemplary embodiment will be described.

FIG. 8 is a cross-sectional view illustrating a front plate and a tip plate according to the third exemplary embodiment.

Referring to FIG. 8, since the nozzle, according to the third exemplary embodiment has the same structure as the nozzle according to the first exemplary embodiment, except for a redundant description thereof will be omitted.

The tip plate 1415 is coupled to the tip of the multi-tube 1410. The tips of the plurality of mixing tubes may be inserted into the tip plate 1415. The front plate, which is designated by reference numeral 3460, is spaced apart from the tip plate 1415 to define the cooling space CS1. The cooling space CS1 may be disposed between the tip plate 1415 and the front plate 3460 and between the plurality of mixing tubes. The front plate 3460 and the tip plate 1415 may be fixed to the inner wall of the multi-tube 1410.

The front plate 3460 may include a center hole 3461 to which the fuel tube 1450 is coupled, and an outer hole 3462 formed outside the center hole 3461 to allow the cooled fuel to flow rearward ( upstream direction based on the flow direction of the fuel in the fuel tube 1450) therethrough. In addition, the front plate 3460 may have an installation hole 3463 into which the mixing tube is inserted.

The first gap G31 between the radially central portion of the front plate 3460 and the tip plate 1415 may be smaller than the second gap G32 between the radially outer portion of the front plate 3460 and the tip plate 1415. The front plate 3460 may have a truncated cone shape such that the portion other than the radially central portion of the front plate is inclined rearward from the radial center thereof toward the outside.

Accordingly, the front plate 3460 may be inclined rearward, and the gap between the front plate 3460 and the tip plate 1415 increases continuously and gradually toward the outside. The fuel introduced into the central portion of the nozzle may be heated and flow outwards, in which case, if the amount of fuel accommodated in the outer portion of the nozzle increases, that portion may also be sufficiently cooled by the fuel.

Based on the above description, in the combustor nozzle, the combustor, and the gas turbine according to the exemplary embodiments, the cooling space may be defined between the tip plate and the front plate. Therefore, it is possible to efficiently cool the tip part of the nozzle by supplying fuel to the cooling space.

While one or more exemplary embodiments have been described with reference to the accompanying drawings, it will be apparent to those skilled in the art that various variations and modifications may be made by adding, changing, or removing components without departing from the scope of the disclosure as defined in the appended claims, and these variations and modifications fall within the scope of the disclosure as defined in the appended claims. Also, it is noted that any one feature of an embodiment of the present disclosure described in the specification may be applied to another embodiment of the present disclosure

## Claims

1. A nozzle (1400) for a combustor for a gas turbine, the combustor configured to burn fuel containing hydrogen, the nozzle (1400) comprising:
a plurality of mixing tubes (1420) for allowing air and fuel to flow through;
a multi-tube (1410) supporting the mixing tubes (1420);
a fuel tube (1450) formed inside the multi-tube (1410) for allowing fuel to flow through;
a tip plate (1415) coupled to a tip of the multi-tube (1410); and
a front plate (1460, 2460, 3460) spaced apart from the tip plate (1415) to define a cooling space (CS1);
**characterized in that**:
each of the mixing tubes (1420) is equipped with at least one mixing guide (1440) extending spirally,
wherein each of the mixing guides (1440) comprises a spiral part (1441) extending spirally and a guide plate (1442) protruding from the spiral part (1441) toward an inlet and having a flat shape, and
wherein the guide plate (1422) has a chamber for accommodation of fuel therein and an injection hole (1445) through which fuel is injected.

2. The nozzle according to claim 1, wherein the front plate (1460, 2430, 3460) comprises a center hole (1462, 2461, 3461) connected to the fuel tube (1450), and an outer hole (1462, 2462, 3462) disposed outside the center hole (1462, 2461, 3461) to allow fuel to pass therethrough.

3. The nozzle according to claim 1 or 2, wherein the multi-tube (1410) is equipped with a rear plate (1418) disposed at a rear end thereof, and with a manifold plate (1470) spaced apart from the rear plate (1418) to define a distribution space.

4. The nozzle according to any one of the preceding claims, wherein:
the at least one mixing guide (1440) includes a plurality of mixing guides (1440) installed in the mixing tube (1420); and
the mixing guides (1440) are fixed to an inner wall of the mixing tube (1420) and spaced apart from each other in a circumferential direction of the mixing tube (1420).

5. The nozzle according to any one of the preceding claims, wherein the mixing tube (1420) comprises an inlet (1422) formed at one longitudinal end thereof to introduce air through the inlet (1422), an injection port (1423) formed at the other longitudinal end thereof to inject a mixture of fuel and air through the injection port (1423), and an injection hole (1425) formed on an outer peripheral surface thereof to inject fuel to the inside through the injection hole (1425) formed on the outer peripheral surface thereof.

6. The nozzle according to any one of the preceding claims, wherein the guide plate (1422) has an inclined surface (1446) formed at a portion thereof toward the inlet to be inclined with respect to an inner peripheral surface of the mixing tube (1420), and the injection hole (1445) of the guide plate (1422) is formed on the inclined surface (1446).

7. The nozzle according to any one of the preceding claims, wherein a first gap (G21, G31) between a radially central portion of the front plate (2460, 3460) and the tip plate (1415) is smaller than a second gap (G22, G32) formed between a radially outer portion of the front plate (2460, 3460) and the tip plate (1415).

8. The nozzle according to any one of the preceding claims, wherein the front plate (3460) is formed to be inclined rearward from the radial center thereof toward the outside.

9. A combustor (1200) for a gas turbine, the combustor comprising:
a burner (1220) having a plurality of nozzles (1400) for injecting fuel and air, and
a duct assembly (1250) coupled to the burner (1220) to burn a mixture of the fuel and the air therein and transmit combustion gas to a turbine (1300),
wherein each of the nozzles (1400) is a nozzle according to any one of the preceding claims.

10. A gas turbine (1000) comprising:
a compressor (1100) configured to compress air introduced thereinto from the outside,
a combustor (1200) configured to mix fuel with the air compressed by the compressor (1100) for combustion, and
a turbine (1300) having a plurality of turbine blades configured to be rotated by combustion gas produced by the combustor (1200),
wherein the combustor (1200) is the combustor according to claim 9.

## Patentansprüche

1. Düse (1400) für eine Brennkammervorrichtung für eine Gasturbine, wobei die Brennkammervorrichtung konfiguriert ist, Brennstoff zu verbrennen, der Wasserstoff enthält, wobei die Düse (1400) Folgendes umfasst:
mehrere Mischrohre (1420), durch die Luft und Brennstoff strömen können;
ein Mehrfachrohr (1410), das die Mischrohre (1420) trägt;
ein Brennstoffrohr (1450), das in dem Mehrfachrohr (1410) gebildet ist, durch das Brennstoff strömen kann;
eine Spitzenplatte (1415), die an eine Spitze des Mehrfachrohrs (1410) gekoppelt ist; und
eine Frontplatte (1460, 2460, 3460), die von der Spitzenplatte (1415) beabstandet ist, um einen Kühlraum (CS1) zu definieren;
**dadurch gekennzeichnet, dass**:
jedes der Mischrohre (1420) mit mindestens einer Mischführung (1440) ausgestattet ist, die spiralförmig verläuft,
wobei jede der Mischführungen (1440) ein Spiralteil (1441), das spiralförmig verläuft, und eine Führungsplatte (1442), die von dem Spiralteil (1441) in Richtung eines Einlasses vorsteht und eine flache Form aufweist, umfasst, und
wobei die Führungsplatte (1442) eine Kammer für die Aufnahme von Brennstoff darin und eine Einspritzöffnung (1445), durch die Brennstoff eingespritzt wird, aufweist.

2. Düse nach Anspruch 1, wobei die Frontplatte (1460, 2430, 3460) eine zentrale Öffnung (1462, 2461, 3461), die mit dem Brennstoffrohr (1450) verbunden ist, und eine äußere Öffnung (1462, 2462, 3462), die außerhalb der zentralen Öffnung (1462, 2461, 3461) angeordnet ist, durch die Brennstoff hindurchtreten kann, umfasst.

3. Düse nach Anspruch 1 oder 2, wobei das Mehrfachrohr (1410) mit einer hinteren Platte (1418), die an einem hinteren Ende davon angeordnet ist, und mit einer Verteilerplatte (1470), die von der hinteren Platte (1418) beabstandet ist, um einen Verteilerraum zu definieren, ausgestattet ist.

4. Düse nach einem der vorhergehenden Ansprüche, wobei:
die mindestens eine Mischführung (1440) mehrere Mischführungen (1440) enthält, die in dem Mischrohr (1420) installiert sind; und
die Mischführungen (1440) an einer Innenwand des Mischrohrs (1420) befestigt sind und in einer Umfangsrichtung des Mischrohrs (1420) voneinander beabstandet sind.

5. Düse nach einem der vorhergehenden Ansprüche, wobei das Mischrohr (1420) einen Einlass (1422), der an einem Längsende davon gebildet ist, um Luft durch den Einlass (1422) einzuleiten, einen Einspritzanschluss (1423), der an dem anderen Längsende davon gebildet ist, um eine Mischung aus Brennstoff und Luft durch den Einspritzanschluss (1423) einzuspritzen, und eine Einspritzöffnung (1425), die an einer äußeren Umfangsfläche davon gebildet ist, um Brennstoff durch die Einspritzöffnung (1425), die an der äußeren Umfangsfläche davon gebildet ist, zu der Innenseite einzuspritzen, umfasst.

6. Düse nach einem der vorhergehenden Ansprüche, wobei die Führungsplatte (1442) eine geneigte Oberfläche (1446) aufweist, die an einem Abschnitt davon in Richtung des Einlasses derart gebildet ist, dass sie bezüglich einer einer Innenumfangsfläche des Mischrohrs (1420) geneigt ist, und die Einspritzöffnung (1445) der Führungsplatte (1442) in der geneigten Oberfläche (1446) gebildet ist.

7. Düse nach einem der vorhergehenden Ansprüche, wobei ein erster Spalt (G21, G31) zwischen einem radial zentralen Abschnitt der Frontplatte (2460, 3460) und der Spitzenplatte (1415) kleiner ist als ein zweiter Spalt (G22, G32), der zwischen einem radial äußeren Abschnitt der Frontplatte (2460, 3460) und der Spitzenplatte (1415) gebildet ist.

8. Düse nach einem der vorhergehenden Ansprüche, wobei die Frontplatte (3460) derart gebildet ist, dass sie von dem radialen Zentrum davon nach hinten in Richtung der Außenseite geneigt ist.

9. Brennkammervorrichtung (1200) für eine Gasturbine, wobei die Brennkammervorrichtung Folgendes umfasst:
einen Brenner (1220), der mehrere Düsen (1400) zum Einspritzen von Brennstoff und Luft aufweist, und
eine Rohrleitungsanordnung (1250), die an den Brenner (1220) gekoppelt ist, um darin eine Mischung des Brennstoffs und der Luft zu verbrennen, und Verbrennungsgas zu einer Turbine (1300) zu übermitteln,
wobei jede der Düsen (1400) eine Düse nach einem der vorhergehenden Ansprüche ist.

10. Gasturbine (1000), die Folgendes umfasst:
einen Kompressor (1100), der konfiguriert ist, Luft, die von der Außenseite in ihn eingeleitet wird, zu komprimieren,
eine Brennkammervorrichtung (1200), die konfiguriert ist, Brennstoff mit der durch den Kompressor (1100) komprimierten Luft zur Verbrennung zu vermischen, und
eine Turbine (1300), die mehrere Turbinenschaufeln aufweist, die konfiguriert sind, durch Verbrennungsgas, das durch die Brennkammervorrichtung (1200) erzeugt wird, gedreht zu werden,
wobei die Brennkammervorrichtung (1200) die Brennkammervorrichtung nach Anspruch 9 ist.

## Revendications

1. Buse (1400) pour une chambre de combustion pour une turbine à gaz, la chambre de combustion étant configurée pour brûler un combustible contenant de l'hydrogène, la buse (1400) comportant :
une pluralité de tubes de mélange (1420) pour permettre à de l'air et du combustible de s'écouler à travers ;
un ensemble multitube (1410) supportant les tubes de mélange (1420) ;
un tube de combustible (1450) formé à l'intérieur de l'ensemble multitube (1410) pour permettre au combustible de s'écouler à travers ;
une plaque d'embout (1415) couplée à un embout de l'ensemble multitube (1410) ; et
une plaque avant (1460, 2460, 3460) espacée de la plaque d'embout (1415) pour définir un espace de refroidissement (CS1) ;
**caractérisée en ce que** :
chacun des tubes de mélange (1420) est équipé d'au moins un guide de mélange (1440) s'étendant en spirale,
dans laquelle chacun des guides de mélange (1440) comporte une partie de spirale (1441) s'étendant en spirale et une plaque de guidage (1442) faisant saillie à partir de la partie de spirale (1441) vers une entrée et ayant une forme plate, et
dans laquelle la plaque de guidage (1422) a une chambre pour la réception du combustible dans celle-ci et un trou d'injection (1445) par lequel le combustible est injecté.

2. Buse selon la revendication 1, dans laquelle la plaque avant (1460, 2460, 3460) comporte un trou central (1462, 2461, 3461) relié au tube de combustible (1450) et un trou extérieur (1462, 2462, 3462) disposé à l'extérieur du trou central (1462, 2461, 3461) pour permettre à du combustible de passer à travers celui-ci.

3. Buse selon la revendication 1 ou 2, dans laquelle l'ensemble multitube (1410) est équipé d'une plaque arrière (1418) disposée sur une extrémité arrière de celui-ci, et d'une plaque collectrice (1470) espacée de la plaque arrière (1418) pour définir un espace de distribution.

4. Buse selon l'une quelconque des revendications précédentes, dans laquelle :
le au moins un guide de mélange (1440) inclut une pluralité de guides de mélange (1440) installés dans le tube de mélange (1420) ; et
les guides de mélange (1440) sont fixés à une paroi intérieure du tube de mélange (1420) et espacés les uns des autres dans une direction circonférentielle du tube de mélange (1420).

5. Buse selon l'une quelconque des revendications précédentes, dans laquelle le tube de mélange (1420) comporte une entrée (1422) formée à une extrémité longitudinale de celui-ci pour introduire de l'air à travers l'entrée (1422), un orifice d'injection (1423) formé à l'autre extrémité longitudinale de celui-ci pour injecter un mélange de combustible et d'air à travers l'orifice d'injection (1423), et un trou d'injection (1425) formé sur une surface périphérique extérieure de celui-ci pour injecter du combustible vers l'intérieur à travers le trou d'injection (1425) formé sur la surface périphérique extérieure de celui-ci.

6. Buse selon l'une quelconque des revendications précédentes, dans laquelle la plaque de guidage (1422) a une surface inclinée (1446) formée sur une partie de celle-ci vers l'entrée pour être inclinée par rapport à une surface périphérique intérieure du tube de mélange (1420), et le trou d'injection (1445) de la plaque de guidage (1422) est formé sur la surface inclinée (1446).

7. Buse selon l'une quelconque des revendications précédentes, dans laquelle un premier interstice (G21, G31) entre une partie radialement centrale de la plaque avant (2460, 3460) et la plaque d'embout (1415) est plus petit qu'un second interstice (G22, G32) formé entre une partie radialement extérieure de la plaque avant (2460, 3460) et la plaque d'embout (1415).

8. Buse selon l'une quelconque des revendications précédentes, dans laquelle la plaque avant (3460) est formée de manière à être inclinée vers l'arrière à partir du centre radial de celle-ci vers l'extérieur.

9. Chambre de combustion (1200) pour une turbine à gaz, la chambre de combustion comportant :
un brûleur (1220) ayant une pluralité de buses (1400) pour injecter du combustible et de l'air, et
un ensemble de conduits (1250) couplé au brûleur (1220) pour brûler un mélange du combustible et de l'air dans celui-ci et transmettre du gaz de combustion à une turbine (1300),
dans laquelle chacune des buses (1400) est une buse selon l'une quelconque des revendications précédentes,

10. Turbine à gaz (1000) comportant :
un compresseur (1100) configuré pour comprimer de l'air introduit dans celui-ci depuis l'extérieur,
une chambre de combustion (1200) configurée pour mélanger du combustible avec l'air comprimé par le compresseur (1100) en vue d'une combustion, et
une turbine (1300) ayant une pluralité d'aubes de turbine configurées pour être mises en rotation par le gaz de combustion produit par la chambre de combustion (1100),
dans laquelle la chambre de combustion (1200) est une chambre de combustion selon la revendication 9.
